# EUROPEAN PATENT APPLICATION

(11) **EP 2 975 797 A1**
(43) Date of publication of application: **20.01.2016**
(21) Application number: 15160685.2
(22) Date of filing: 25.03.2015
(51) Int. Cl.: H04L 7/04

(54) **Apparatus and method for detecting start frame delimiter**

(30) Priority: 18.07.2014 KR 20140090862
(71) Applicant: Samsung Electro-Mechanics Co., Ltd., Gyeonggi-do (KR)
(72) Inventor: Kim, Jin, Gyeonggi-Do (KR)
(74) Representative: Grünecker Patent- und Rechtsanwälte PartG mbB

(57) **Abstract**

An apparatus and a method for detecting a start frame delimiter my include a signal receiving unit receiving a wireless signal including a first symbol and a second symbol; a cross correlation unit performing a cross correlation between the first symbol and a reference symbol; a decoding unit decoding the second symbol when a cross correlation value between the first symbol and the reference symbol is equal to or higher than a threshold value; and a comparing and determining unit comparing bit values of the second symbol with bit values of the reference symbol and determining that the start frame delimiter is detected when a preset number of bit values of the second symbol match the bit values of the reference symbol.

## Description

### CROSS-REFERENCE TO RELATED APPLICATION

This application claims the priority to, and benefit of, Korean Patent Application No. 10-2014-0090862 filed on July 18, 2014, with the Korean Intellectual Property Office, the disclosure of which is incorporated herein by reference.

### BACKGROUND

The present disclosure relates to an apparatus and a method for detecting a start frame delimiter.

In general, a packet-based wireless communications system is configured by a transmitter and a receiver, transmitting and receiving data using packets. The transmitter transmits a synchronization signal to recognize a start of a frame. The synchronization signal is transmitted using a sequence set in a transmitting side and a receiving side. As the synchronization signal described above, a preamble sequence and a start frame delimiter (SFD) are used.

Here, the start frame delimiter serves to determine the start of user data in a packet and the receiver may detect the start frame delimiter from the received wireless signal and recognize the start frame delimiter as the packet of the corresponding wireless communications system.

An apparatus for detecting a start frame delimiter according to the related art performs a cross correlation between the SFD received from the transmitting side and a known symbol. Here, in a case in which a section in which a cross correlation value is equal to or higher than a threshold value which is set to detect the SFD is detected, the apparatus for detecting a start frame delimiter determines that the start frame delimiter is detected, finds a maximum cross correlation value to demodulate the user data, and synchronizes a timing and a phase.

However, in a case in which an apparatus for detecting a start frame delimiter according to the related art performs a cross correlation between a known symbol and an SFD, if a threshold value is set, even in the case that the apparatus for detecting the start frame delimiter does not receive a packet, it may determine that the SFD has been erroneously detected due to noise or a spark signal.

In order to prevent the above-mentioned issue, if the threshold value is set to be high, signals having a low signal-to-noise ratio (SNR) may not be received, resulting in a deterioration in sensitivity.

### SUMMARY

An exemplary embodiment in the present disclosure may provide an apparatus and a method for detecting a start frame delimiter capable of accurately detecting the start frame delimiter by receiving a wireless signal including a first symbol and a second symbol, performing a cross correlation between the first symbol and a reference symbol, performing a bit decoding for the second symbol when a cross correlation value between the first symbol and the reference symbol is equal to or higher than a threshold value, and comparing bit values of the second symbol with bit values of the reference symbol to determine whether or not the start frame delimiter is detected.

An exemplary embodiment in the present disclosure may also provide an apparatus and a method for detecting a start frame delimiter capable of accurately detecting the start frame delimiter by detecting a first peak value and a second peak value by performing a cross correlation between the first symbol and the reference symbol and between the second symbol and the reference symbol in the wireless signal, calculating a distance between the first peak value and the second peak value, and comparing the distance with a length of the reference symbol.

According to an exemplary embodiment in the present disclosure, a method for detecting a start frame delimiter may include: receiving a wireless signal including a first symbol and a second symbol; performing a cross correlation between the first symbol and a reference symbol; decoding the second symbol when a cross correlation value between the first symbol and the reference symbol is equal to or higher than a threshold value; and comparing bit values of the second symbol with bit values of the reference symbol and determining that the start frame delimiter is detected when a preset number of bit values of the second symbol match the bit values of the reference symbol.

According to an exemplary embodiment in the present disclosure, a method for detecting a start frame delimiter may include: receiving a wireless signal including a first symbol and a second symbol; detecting a first peak value by performing a cross correlation between the first symbol and a reference symbol; detecting a second peak value by performing a cross correlation between the second symbol and the reference symbol; calculating a distance between the first peak value and the second peak value; and determining that the start frame delimiter is detected when the distance between the first peak value and the second peak value is equal to a length of the reference symbol or is within a preset error range.

According to another exemplary embodiment in the present disclosure, an apparatus for detecting a start frame delimiter may include: a signal receiving unit receiving a wireless signal including a first symbol and a second symbol; a cross correlation unit performing a cross correlation between the first symbol and a reference symbol; a decoding unit decoding the second symbol when a cross correlation value between the first symbol and the reference symbol is equal to or higher than a threshold value; and a comparing and determining unit comparing bit values of the second symbol with bit values of the reference symbol and determining that the start frame delimiter is detected when a preset number of bit values of the second symbol match the bit values of the reference symbol.

According to an exemplary embodiment in the present disclosure, an apparatus for detecting a start frame delimiter may include: a signal receiving unit receiving a wireless signal including a first symbol and a second symbol; a cross correlation unit detecting a first peak value by performing a cross correlation between the first symbol and a reference symbol and detecting a second peak value by performing a cross correlation between the second symbol and the reference symbol; a distance calculating unit calculating a distance between the first peak value and the second peak value; and a comparing and determining unit determining that the start frame delimiter is detected when the distance between the first peak value and the second peak value is equal to a length of the reference symbol or is within a preset error range.

### BRIEF DESCRIPTION OF DRAWINGS

The above and other aspects, features and advantages of the present disclosure will be more clearly understood from the following detailed description taken in conjunction with the accompanying drawings, in which:
FIG. 1 is a diagram illustrating a wireless communications system to which an apparatus for detecting a start frame delimiter according to an exemplary embodiment of the present disclosure is applied;
FIG. 2 is a diagram illustrating an example of a wireless signal applied to an exemplary embodiment of the present disclosure;
FIG. 3 is a diagram illustrating an apparatus for detecting a start frame delimiter according to an exemplary embodiment of the present disclosure;
FIG. 4 is a diagram illustrating an apparatus for detecting a start frame delimiter according to another exemplary embodiment of the present disclosure;
FIG. 5 is a diagram illustrating an apparatus for detecting a start frame delimiter according to another exemplary embodiment of the present disclosure;
FIG. 6 is a diagram illustrating a method for detecting a start frame delimiter according to an exemplary embodiment of the present disclosure;
FIG. 7 is a diagram illustrating a method for detecting a start frame delimiter according to another exemplary embodiment of the present disclosure; and
FIG. 8 is a diagram illustrating a method for detecting a start frame delimiter according to another exemplary embodiment of the present disclosure.

### DETAILED DESCRIPTION

Exemplary embodiments of the present disclosure will now be described in detail with reference to the accompanying drawings.

The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

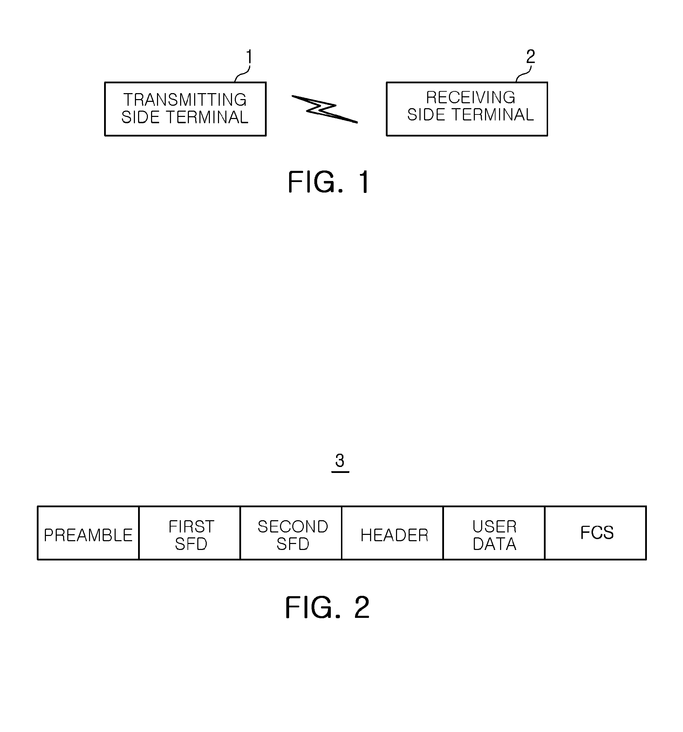

FIG. 1 is a diagram illustrating a wireless communications system to which an apparatus for detecting a start frame delimiter according to an exemplary embodiment of the present disclosure is applied, and FIG. 2 is a diagram illustrating an example of a wireless signal applied to an exemplary embodiment of the present disclosure.

Referring to FIG. 1, a wireless communications system to which an apparatus for detecting a start frame delimiter according to an exemplary embodiment of the present disclosure is applied may include a transmitting side terminal 1 and a receiving side terminal 2. Here, the transmitting side terminal 1 and the receiving side terminal 2 may transmit and receive data using a packet.

The transmitting side terminal 1 may transmit a synchronization signal to recognize a start of a frame. Here, the synchronization signal may be a preamble sequence and a start frame delimiter (SFD).

According to an exemplary embodiment, the transmitting side terminal 1 generates a wireless signal 3 including a first symbol and a second symbol and transmits the wireless signal 3 to the receiving side terminal 2. Here, the wireless signal 3 may include a preamble, a first symbol (first SFD), a second symbol (second SFD), a header, user data (payload), and a frame check sequence (FCS), as shown in FIG. 2. According to an exemplary embodiment, the first symbol (first SFD) and the second symbol (second SFD) may be the same as each other.

The receiving side terminal 2 may receive the wireless signal 3, find a start point of the frame using the preamble and the SFDs included in the wireless signal 3, and then demodulate the user data with reference to a demodulation parameter of the header. Specifically, the receiving side terminal 2 may synchronize a frequency using the preamble, synchronize a timing and a phase using the SFDs, and include the apparatus for detecting the start frame delimiter for detecting the SFD.

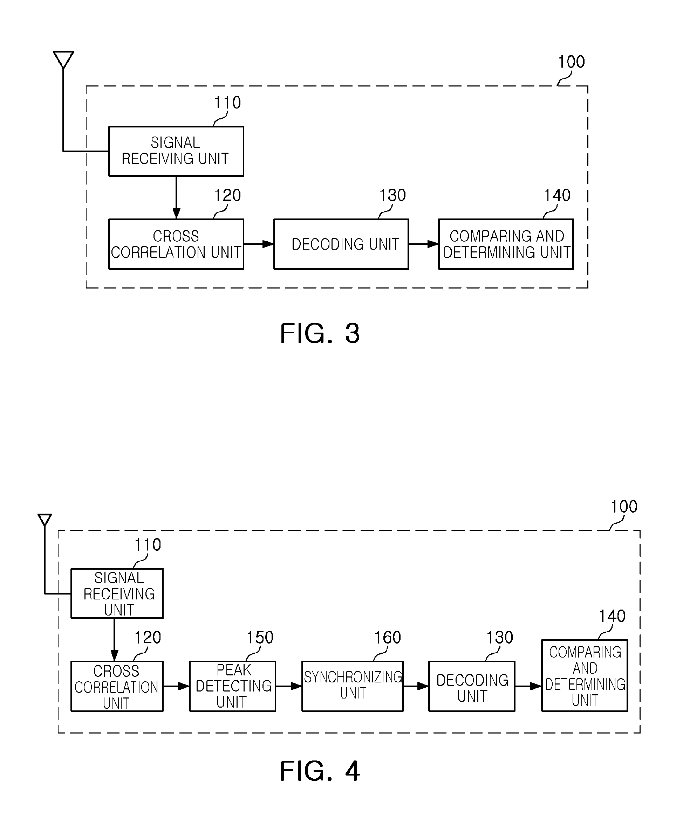

The start frame delimiter described above will be described below in more detail with reference to FIGS. 3 through 5.

FIG. 3 is a diagram illustrating an apparatus for detecting a start frame delimiter according to an exemplary embodiment of the present disclosure and FIG. 4 is a diagram illustrating an apparatus for detecting a start frame delimiter according to another exemplary embodiment of the present disclosure.

Referring to FIGS. 3 and 4, an apparatus 100 for detecting a start frame delimiter may include a signal receiving unit 110, a cross correlation unit 120, a decoding unit 130, and a comparing and determining unit 140. According to an exemplary embodiment, the apparatus 100 for detecting the start frame delimiter may further include a peak detecting unit 150 and a synchronizing unit 160.

The term that '∼ unit' used in this embodiment refers to a software or hardware component, such as FPGA (field-programmable gate array) or ASIC, and '∼ unit' performs certain tasks. '∼Unit' may be stored in a storage medium capable of addressing, and may be configured to operate one or more processors. Thus, as an example '∼unit' may include a software component, object-oriented software components, class components and task components and components such as, processors, functions, attributes (properties), procedures, subroutines, segments of program code, drivers, firmware, microcode, circuitry, data, databases, data structures, tables, arrays, and variables.

The signal receiving unit 110 may receive the wireless signal 3 from the outside through an antenna and transmit the wireless signal 3 to the cross correlation unit 120.

Here, the wireless signal 3 may include a first symbol and a second symbol. According to an exemplary embodiment, the signal receiving unit 110 may convert the wireless signal, which is an analog signal, into a digital signal and transmit the digital signal to the cross correlation unit 120.

Specifically, the signal receiving unit 110 may receive a radio frequency signal to convert it into an intermediate frequency signal, separate the intermediate frequency signal into an in-phase signal and a quadrature signal, and convert the separated signal into the digital signal to transmit it to the cross correlation unit 120.

The cross correlation unit 120 may perform a cross correlation using the first symbol of the wireless signal received from the signal receiving unit 110 and a reference symbol.

According to an exemplary embodiment, the cross correlation unit 120 may calculate the cross correlation using the in-phase signal and the quadrature signal which are separated by the signal receiving unit 110 and the reference symbol.

The decoding unit 130 may perform a bit decoding in the second symbol in a case in which a cross correlation value between the first symbol and the reference symbol calculated by the cross correlation unit 120 is equal to or higher than a threshold value.

The comparing and determining unit 140 may determine that the start frame delimiter is detected, using bit values of the second symbol demodulated by the decoding unit 130.

Specifically, the comparing and determining unit 140 may compare the bit values of the second symbol demodulated by the decoding unit 130 with bit values of the reference symbol and may determine that the start frame delimiter is detected in a case in which all the bit values of the second symbol match the bit values of the reference symbol or a preset number of bit values of the second symbol match the bit values of the reference symbol.

The peak detecting unit 150 may detect a peak value of the first symbol using the cross correlation value calculated by the cross correlation unit 120.

The synchronizing unit 160 may synchronize a phase and a timing of the second symbol with a phase and a timing of the first symbol on the basis of the peak value of the first symbol detected by the peak detecting unit 150.

As described above, once the synchronizing unit 160 synchronizes the phase and the timing of the second symbol on the basis of the peak value of the first symbol, the decoding unit 130 may more accurately perform the bit decoding.

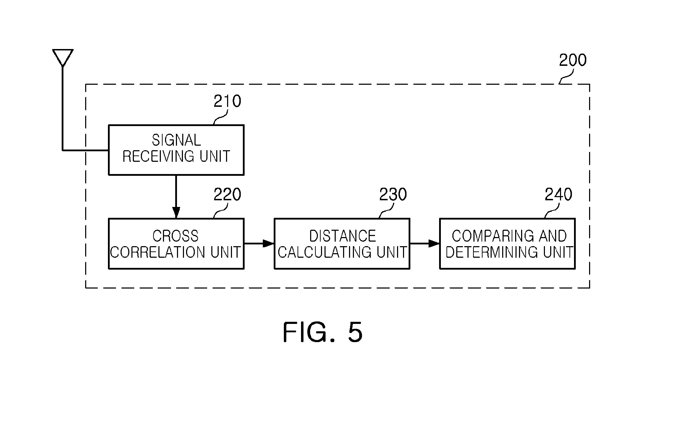

FIG. 5 is a diagram illustrating an apparatus for detecting a start frame delimiter according to another exemplary embodiment of the present disclosure.

Referring to FIG. 5, an apparatus 200 for detecting a start frame delimiter according to another exemplary embodiment of the present disclosure may include a signal receiving unit 210, a cross correlation unit 220, a distance calculating unit 230, and a comparing and determining unit 240.

The signal receiving unit 210 may receive the wireless signal 3 from the outside through an antenna and transmit the wireless signal 3 to the cross correlation unit 220.

Here, the wireless signal 3 may include the first symbol and the second symbol.

According to an exemplary embodiment, the signal receiving unit 210 may convert the wireless signal, which is an analog signal, into a digital signal and transmit the digital signal to the cross correlation unit 220.

Specifically, the signal receiving unit 210 may receive a radio frequency signal to convert it into an intermediate frequency signal, separate the intermediate frequency signal into an in-phase signal and a quadrature signal, and convert the separated signal into the digital signal to transmit it to the cross correlation unit 220.

The cross correlation unit 220 may detect peak values of the first symbol and the second symbol. Specifically, the cross correlation unit 220 may detect a first peak value by performing a cross correlation between the first symbol and the reference symbol and may detect a second peak value by performing a cross correlation between the second symbol and the reference symbol.

The distance calculating unit 230 may calculate a distance between the first peak value and the second peak value.

According to an exemplary embodiment, the distance calculating unit 230 may calculate a distance between the first peak value and the second peak value by counting the number of sampling between the first peak value and the second peak value.

The comparing and determining unit 240 may determine that the start frame delimiter is detected in a case in which the distance between the first peak value and the second peak value calculated by the distance calculating unit 230 is equal to a length of the reference symbol.

In addition, the comparing and determining unit 240 may determine that the start frame delimiter is detected in a case in which the distance between the first peak value and the second peak value is equal to the length of the reference symbol or is within a preset error range.

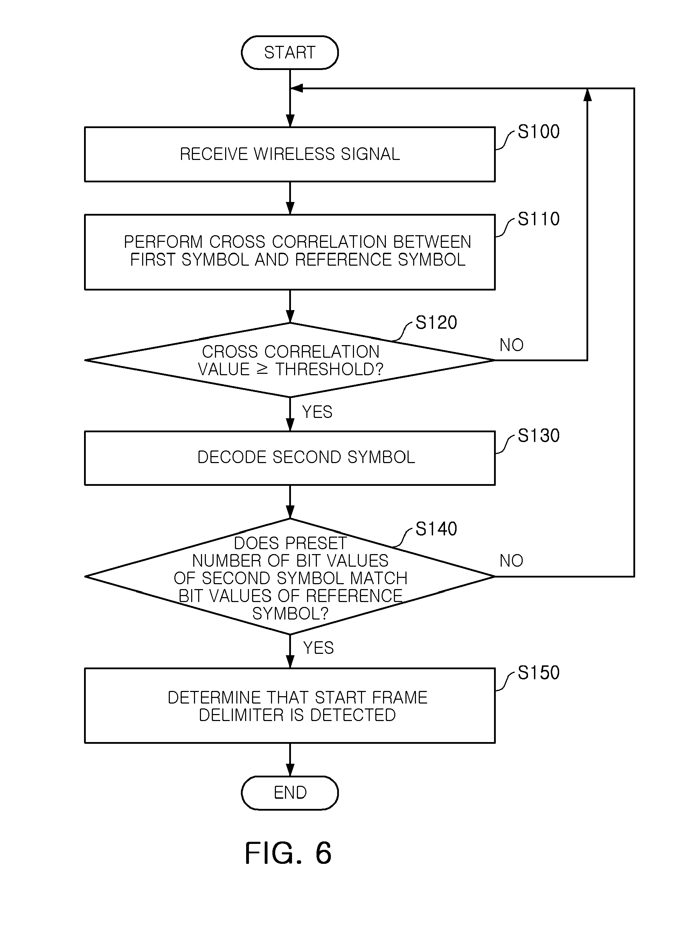

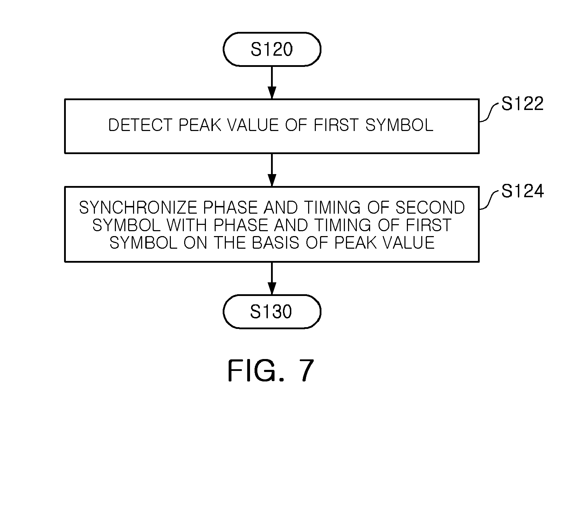

FIG. 6 is a diagram illustrating a method for detecting a start frame delimiter according to an exemplary embodiment of the present disclosure and FIG. 7 is a diagram illustrating a method for detecting a start frame delimiter according to another exemplary embodiment of the present disclosure.

Since examples of the methods for detecting the start frame delimiter shown in FIGS. 6 and 7 are performed in the apparatus 100 for detecting the start frame delimiter described above with reference to FIGS. 3 and 4, a description of features that are the same as or correspond to the above-mentioned features will be omitted.

Referring to FIGS. 6 and 7, in the method for detecting the start frame delimiter according to an exemplary embodiment of the present disclosure, first, the signal receiving unit 110 may receive a wireless signal including a first symbol and a second symbol from the transmitting side terminal 1 (S100).

Next, the cross correlation unit 120 may perform a cross correlation between the first symbol and a prestored reference symbol (S110). Next, a cross correlation value may be compared to a preset threshold value (S120), and in a case in which the cross correlation value is equal to or higher than the threshold value, the decoding unit 130 may demodulate the second symbol (S130).

According to an exemplary embodiment, as shown in FIG. 7, the method may further include, before the decoding of the second symbol by the decoding unit 130 (S130), detecting a peak value of the first symbol using the cross correlation value of the first symbol (S122) and synchronizing a phase and a timing of the second symbol with a phase and a timing of the first symbol on the basis of the peak value of the first symbol (S124).

By synchronizing the timing and phase on the basis of the peak value of the first symbol before the decoding of the second symbol, the second symbol may be more accurately demodulated.

Next, the comparing and determining unit 140 may compare bit values of the second symbol demodulated by the decoding unit 130 with bit values of the reference symbol (S140) and may determine that the start frame delimiter is detected in a case in which all the bit values of the second symbol match the bit values of the reference symbol or a preset number of bit values of the second symbol match the bit values of the reference symbol (S150).

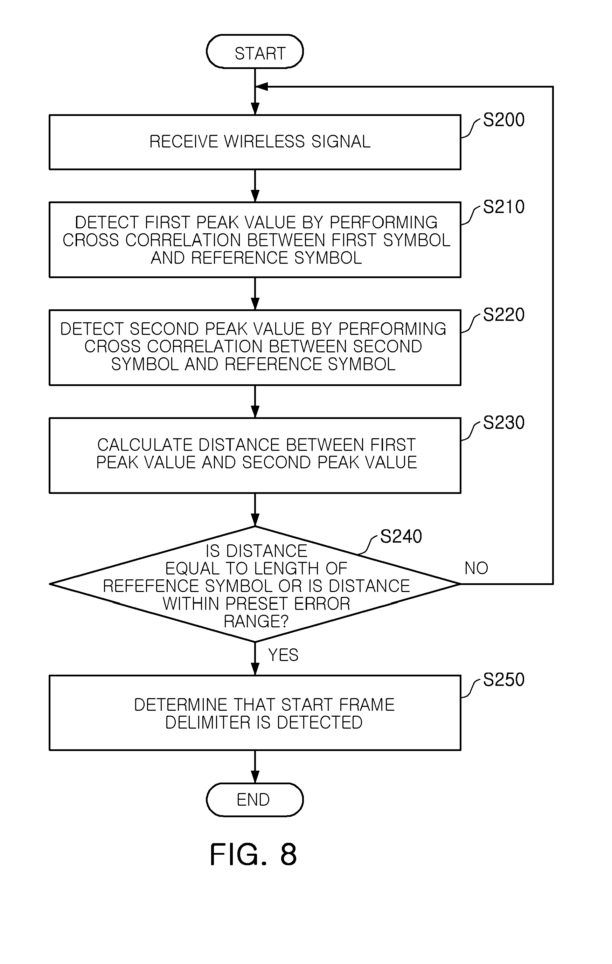

FIG. 8 is a diagram illustrating a method for detecting a start frame delimiter according to another exemplary embodiment of the present disclosure.

Since an example of the method for detecting the start frame delimiter shown in FIG. 8 is performed in the apparatus 200 for detecting the start frame delimiter described above with reference to FIG. 5, a description of features that are the same as or correspond to the above-mentioned features will be omitted.

Referring to FIG. 8, in the method for detecting the start frame delimiter according to an exemplary embodiment of the present disclosure, first, the signal receiving unit 210 may receive a wireless signal including a first symbol and a second symbol from the transmitting side terminal 1 (S200).

Next, the cross correlation unit 220 may detect a first peak value by performing a cross correlation between the first symbol and a prestored reference symbol (S210).

Next, the cross correlation unit 220 may detect a second peak value by performing a cross correlation between the second symbol and the reference symbol (S220).

Next, the distance calculating unit 230 may calculate a distance between the first peak value and the second peak value (S230).

According to an exemplary embodiment, the distance calculating unit 230 may calculate the distance between the first peak value and the second peak value by counting the number of sampling between the first peak value and the second peak value.

Next, the distance between the first peak value and the second peak value calculated by the distance calculating unit 230 may be compared to a length of the reference symbol (S240) and it may be determined that the start frame delimiter is detected in a case in which the distance between the first peak value and the second peak value is equal to the length of the reference symbol or is within a preset error range (S250).

As set forth above, according to exemplary embodiments of the present disclosure, by receiving a wireless signal including a first symbol and a second symbol and double-checking whether or not a start frame delimiter is detected, a packet may be more accurately detected even in the case that a threshold value is set to be low according to a sensitivity level of the wireless signal, whereby reliability of the system may be improved.

While exemplary embodiments have been shown and described above, it will be apparent to those skilled in the art that modifications and variations could be made without departing from the scope of the present invention as defined by the appended claims.

## Claims

1. A method for detecting a start frame delimiter, the method comprising:
receiving a wireless signal including a first symbol and a second symbol;
performing a cross correlation between the first symbol and a reference symbol;
decoding the second symbol when a cross correlation value between the first symbol and the reference symbol is equal to or higher than a threshold value; and
comparing bit values of the second symbol with bit values of the reference symbol and determining that the start frame delimiter is detected when a preset number of bit values of the second symbol match the bit values of the reference symbol.

2. The method of claim 1, further comprising, between the performing of the cross correlation and the decoding of the second symbol,
detecting a peak value of the first symbol using the cross correlation value; and
synchronizing a phase and a timing of the second symbol with a phase and a timing of the first symbol on the basis of the peak value.

3. The method of claim 1, wherein the first symbol and the second symbol are the same as each other.

4. A method for detecting a start frame delimiter, the method comprising:
receiving a wireless signal including a first symbol and a second symbol;
detecting a first peak value by performing a cross correlation between the first symbol and a reference symbol;
detecting a second peak value by performing a cross correlation between the second symbol and the reference symbol;
calculating a distance between the first peak value and the second peak value; and
determining that the start frame delimiter is detected when the distance between the first peak value and the second peak value is equal to a length of the reference symbol or is within a preset error range.

5. The method of claim 4, wherein the first symbol and the second symbol are the same as each other.

6. An apparatus for detecting a start frame delimiter, the apparatus comprising:
a signal receiving unit configured to receive a wireless signal including a first symbol and a second symbol;
a cross correlation unit configured to perform a cross correlation between the first symbol and a reference symbol;
a decoding unit configured to decode the second symbol when a cross correlation value between the first symbol and the reference symbol is equal to or higher than a threshold value; and
a comparing and determining unit configured to compare bit values of the second symbol with bit values of the reference symbol and determining that the start frame delimiter is detected when a preset number of bit values of the second symbol match the bit values of the reference symbol.

7. The apparatus of claim 6, further comprising:
a peak detecting unit configured to detect a peak value of the first symbol using the cross correlation value; and
a synchronizing unit configured to synchronize a phase and a timing of the second symbol with a phase and a timing of the first symbol on the basis of the peak value.

8. The apparatus of claim 6, wherein the first symbol and the second symbol are the same as each other.

9. An apparatus for detecting a start frame delimiter, the apparatus comprising:
a signal receiving unit configured to receive a wireless signal including a first symbol and a second symbol;
a cross correlation unit configured to detect a first peak value by performing a cross correlation between the first symbol and a reference symbol and detecting a second peak value by performing a cross correlation between the second symbol and the reference symbol;
a distance calculating unit configured to calculate a distance between the first peak value and the second peak value; and
a comparing and determining unit configured to determine that the start frame delimiter is detected when the distance between the first peak value and the second peak value is equal to a length of the reference symbol or is within a preset error range.

10. The apparatus of claim 9, wherein the cross correlation unit detects the first peak value and the second peak value when a cross correlation value between the first symbol and the reference symbol is equal to or higher than a threshold value.

11. The apparatus of claim 9, wherein the first symbol and the second symbol are the same as each other.
